# EUROPEAN PATENT SPECIFICATION

(11) **EP 2 495 500 B1**
(45) Date of publication and mention of the grant of the patent: **09.05.2018**
(21) Application number: 12001244.8
(22) Date of filing: 24.02.2012
(51) Int. Cl.: F24D 17/02, F24H 1/18, F24H 1/20, F24H 4/04, F24D 3/18

(54) **Hot water supply system**
Heißwasserversorgungssystem
Système de fourniture d'eau chaude

(30) Priority: 04.03.2011 JP 2011047057
(43) Date of publication of application: 05.09.2012
(73) Proprietor: Mitsubishi Electric Corporation, Tokyo 100-8310 (JP)
(72) Inventor: Chisaki, Masazumi, Tokyo 100-8310 (JP); Uehara, Nobuaki, Tokyo 100-8310 (JP)
(74) Representative: Pfenning, Meinig & Partner mbB

(56) References cited:
- EP-A2- 0 309 198
- GB-A- 407 865
- GB-A- 1 011 912
- US-A- 5 677 026

## Description

### Technical Field

The present invention relates to a hot water supply system.

### Background Art

Conventionally, there is a hot water supply tank to which a vacuum heat insulation member is applied (refer to Patent Literature 1, for example). When the vacuum heat insulation member is applied to an outer periphery of the hot water supply tank, a heat leakage amount of the hot water supply tank is reduced. As a result, power consumption is reduced.

There is also a hot water supply and heating system to which a heat pump heat source unit is applied (refer to Patent Literature 2, for example).

### Citation List

### Patent Literature

Patent Literature 1: JP 2005-226965 A
Patent Literature 2: JP 2007-051830 A

GB 10 11 912 discloses an electric water heater comprising a water storage tank divided into an upper and lower compartment in communication with each other through a restrictive passage, a thermostat controlled electric heater element in each compartment, means to supply water to the lower compartment and means to draw off water separately from each of said compartments. The storage tank is substantially cylindrical and is enclosed in a cylindrical shell, at the space between the shell and the tank is filled with heat insulation material. The means to draw off water comprise a tap for each compartment mounted on the lower part of the shell are connected with their respective compartments by pipes embedded in the heat insulating material.

Further, US 5 677 026 describes an inflatable, self-standing, insulating jacket for a hot water tank. The jacket is comprised of a hood, a platform and an attachment means for securing the hood to the platform. When installed, the hood is disposed around the tank so as to define an annular clearance between them. The annular clearance provides air space which serves to insulate the tank. The clearance also accommodates vertically extending inlet and outlet pipes of the tank as well as electrical connections. The pipes and the electrical connections pass through apertures formed in the platform.

### Summary of invention

### Technical Problem

It is desirable to heat-insulate not only a tank but also pipes in a hot water supply system. However, when the tank and the pipes are separately heat-insulated, the thickness of a heat insulation member will naturally increase. The size of the hot water supply system as a whole product will increase.

An object of the present invention is to reduce the size of a hot water supply system as a whole product by reducing an amount of a heat insulation member to be used for heat-insulating pipes in the hot water supply system, for example.

### Solution to Problem

A hot water supply system according to the invention includes the features of claim 1.

### Advantageous Effects of Invention

According to one aspect of the present invention, there is formed, between the tank and the heat insulation member, a space where the connection portion and at least a part of the extension portion of at least one pipe are disposed. Accordingly, an amount of the heat insulation member to be used for heat insulation of the pipes is reduced. The size of the hot water supply system as a whole product is thereby reduced.

### Brief Description of Drawings

The present invention will become fully understood from the detailed description given hereinafter in conjunction with the accompanying drawings, in which:

Fig. 1 is a diagram showing a configuration of a hot water supply and heating system according to a first embodiment;
Fig. 2 is a cross sectional view showing heat insulation of a tank and pipes of the hot water supply and heating system according to the first embodiment; and
Fig. 3 is a longitudinal sectional view showing heat insulation of the tank and the pipes of the hot water supply and heating system according to the first embodiment.

### Description of Embodiments

In describing a preferred embodiment illustrated in the drawings, specific terminology is employed for the sake of clarity However, the disclosure of the present invention is not intended to be limited to the specific terminology so selected, and it is to be understood that each specific element includes all technical equivalents that operate in a similar manner and achieve a similar result.

An embodiment of the present invention will be described below using drawings.

### First Embodiment

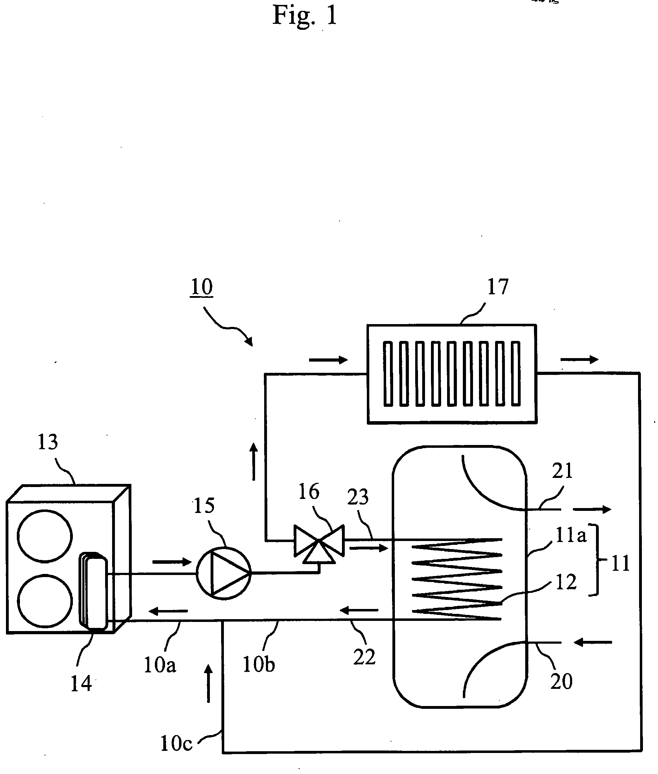

Fig. 1 is a diagram showing a configuration of a hot water supply and heating system 10 according to the first embodiment.

Referring to Fig. 1, the hot water supply and heating system 10 includes a tank 11, a heat pump heat source unit 13, a water circulation pump 15, an electromagnetic three-way valve 16, and a hot water heating appliance. 17 (e.g., floor heating). The hot water supply and heating system 10 further includes a water supply pipe 20, a hot water discharge pipe 21, a return pipe 22, and an inlet pipe 23, as an example of a plurality of pipes.

In the hot water supply and heating system 10, a water circuit 10a, a hot water supply circuit 10b, and a heating circuit 10c are configured to form an example of a fluid circuit. Water, which is an example of a fluid, circulates in the water circuit 10a, the hot water supply circuit 10b, and the heating circuit 10c.

The heat pump heat source unit 13 includes a heat pump circuit in which an expansion device, an evaporator, a compressor, and a water refrigerant heat exchanger 14 (e.g., a condenser) are connected and a refrigerant (e.g., CO₂) circulates. The compressor compresses and heats the refrigerant. The water refrigerant heat exchanger 14 heats the water flowing in the water circuit 10a, using the refrigerant heated by the compressor. The expansion device cools the refrigerant by expansion cooling. The evaporator recovers heat for the refrigerant from outside air after the refrigerant has been cooled by the expansion device. In this manner, the heat pump heat source unit 13 performs a heat pump cycle operation, thereby heating the water circulating in the water circuit 10a.

The electromagnetic three-way valve 16 connects respective water supply paths for the water circuit 10a, the hot water supply circuit 10b, and the heating circuit 10c. The electromagnetic three-way valve 16 causes the water heated by a heat pump cycle of the heat pump heat source unit 13 to flow into the hot water supply circuit 10b and the heating circuit 10c. Respective amounts of the water to be flown into the hot water supply circuit 10b and the heating circuit 10c are controlled from an outside.

The tank 11 includes a hot water storage tank 11a and a heat exchanger 12 (which is specifically a water heat exchanger). The hot water storage tank 11a stores water. The heat exchanger 12 heats the water stored in the hot water storage tank 11a, using the water circulating in the hot water supply circuit 10b (i.e., the water heated by the heat pump cycle of the heat pump heat source unit 13).

The water supply pipe 20 supplies water to the hot water storage tank 11a of the tank 11. The inlet pipe 23 causes the water circulating in the hot water supply circuit 10b to flow into the heat exchanger 12 of the tank 11. The return pipe 22 returns the water used by the heat exchanger 12 to the hot water supply circuit 10b. The hot water discharge pipe 21 causes the water heated by the heat exchanger 12 to flow out from the hot water storage tank 11a.

The hot water supply and heating system 10 in this embodiment is an example of a hot water supply system and does not need to include the hot water heating appliance 17. In such a case, the electromagnetic three-way valve 16 is not necessary.

Though the tank 11 in this embodiment stores the water heated by indirectly using the heat pump cycle, the tank 11 may store water heated by directly using the heat pump cycle. In other words, the tank 11 does not need to include the heat exchanger 12. In such a case, the water circulating in the hot water supply circuit 10b flows into the hot water storage tank 11a of the tank 11 through the inlet pipe 23, and is then stored in the hot water storage tank 11a. After this water has been used, the water is returned to the hot water supply circuit 10b through the return pipe 22. Alternatively, the water separately supplied from the water supply pipe 20 is returned to the hot water supply circuit 10b through the return pipe 22.

Operation of the hot water supply and heating system 10 will be described below.

When the hot water supply and heating system 10 is operated, water in the water circuit 10a is heated by the water refrigerant heat exchanger 14 provided within the heat pump heat source unit 13. Hot water obtained by the heating is circulated in the water circuit 10a by the water circulation pump 15. Supply of the hot water discharged from the water circulation pump 15 is switched to the hot water supply circuit 10b and the heating circuit 10c by the electromagnetic three-way valve 16. The hot water in the hot water supply circuit 10b is sent to the heat exchanger 12 provided in the hot water storage tank 11a of the tank 11 through the inlet pipe 23. The hot water sent to the heat exchanger 12 is heat-exchanged by water in the hot water storage tank 11a, and is then returned to the water circuit 10a again by the water circulation pump 15 through the return pipe 22. Hot water in the hot water storage tank 11a heated by the heat exchange is used for a shower or the like through the hot water discharge pipe 21. The hot water in the heating circuit 10c is sent to the hot water heating appliance 17. Then, heat of the hot water is radiated by heating an indoor space, and the hot water is then returned to the water circuit 10a again by the water circulation pump 15.

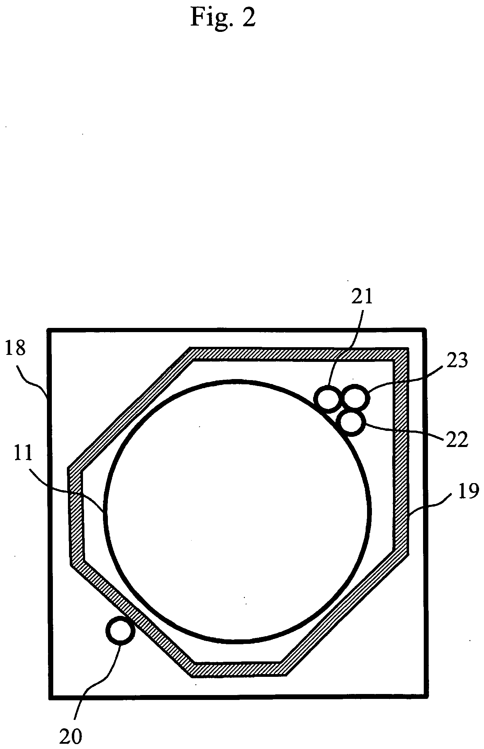

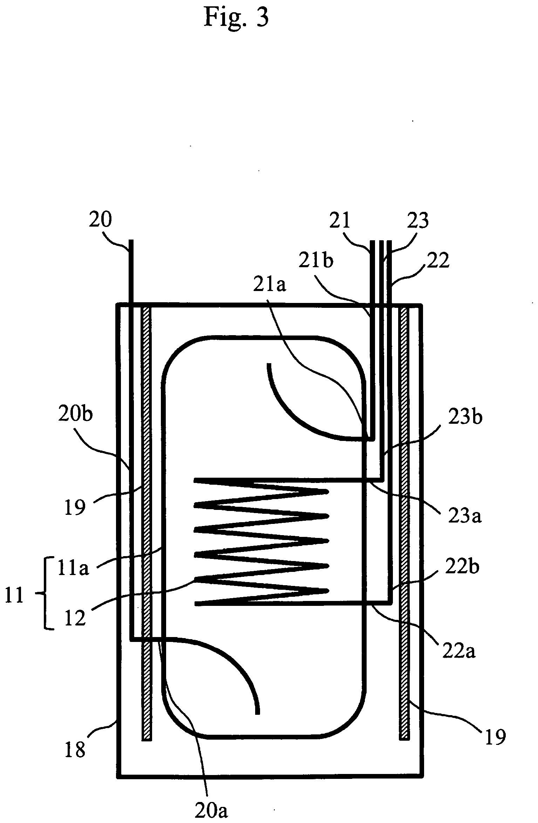

Fig. 2 is a cross sectional view showing heat insulation of the tank 11 and the pipes of the hot water supply and heating system 10. Fig. 3 is a longitudinal sectional view showing heat insulation of the tank 11 and the pipes of the hot water supply and heating system 10.

The hot water supply and heating system 10 further includes a case 18 enclosing the tank 11 (i.e., the outer case of the hot water supply tank) and a heat insulation member 19 (which is specifically a vacuum heat insulation member).

The case 18 has a rectangular parallelepiped shape, for example, and holds the tank 11 and the pipes (i.e., the water supply pipe 20, the hot water discharge pipe 21, the return pipe 22, and the inlet pipe 23) in its inside. The pipes are disposed at corner portions of the case 18, vertically between the case 18 and the tank 11 of a cylindrical shape. A temperature difference among the hot water flowing through the hot water discharge pipe 21, the hot water flowing through the return pipe 22, and the hot water flowing through the inlet pipe 23 is approximately 10 to 15°C. Each of the hot water flowing through the hot water discharge pipe 21, the hot water flowing through the return pipe 22, and the hot water flowing through the inlet pipe 23 has a small temperature difference from the hot water stored in the tank 11. For this reason, the hot water discharge pipe 21, the return pipe 22, and the inlet pipe 23 are disposed inside a space enclosed by the same heat insulation member 19. Water available in the market of the installation location flows through the water supply pipe 20, and its temperature becomes as low as several degrees centigrade in the winter. For this reason, the water supply pipe 20 is disposed outside the space enclosed by the heat insulation member 19.

The heat insulation member 19 is disposed in such a manner that the heat insulation member 19 surrounds the tank 11, the hot water discharge pipe 21, the return pipe 22, and the inlet pipe 23. The hot water discharge pipe 21, the return pipe 22, and the inlet pipe 23 are disposed to be close to one another. Further, each of the hot water discharge pipe 21, the return pipe 22, and the inlet pipe 23 is disposed to have a short distance from the tank 11. On the other hand, the water supply pipe 20 is disposed outside the heat insulation member 19. The water supply pipe 20 and the remaining pipes (i.e., the hot water discharge pipe 21, the return pipe 22, and the inlet pipe 23) are disposed at the corner portions of the case 18 that are different to each other. The shape and disposition of a portion of the heat insulation member 19 are designed in such a manner that the portion keeps away from the water supply pipe 20. Specifically, the heat insulation member 19 is provided along the inner wall of the case 18 at the corner portion where the hot water discharge pipe 21, the return pipe 22, and the inlet pipe 23 are disposed, and the heat insulation member 19 is provided along the outer wall of the tank 11 at the other corner portions (particularly the corner portion where the water supply pipe 20 is disposed). By adoption of such a configuration, according to the present embodiment, the need for a process of separately heat-insulating each of the pipes held in the case 18, which are the hot water discharge pipe 21, the return pipe 22, and the inlet pipe 23, is eliminated.

Preferably, the heat insulation member 19 is the vacuum heat insulation member. Referring to Figs. 2 and 3, the vacuum heat insulation members each having a flat plate shape (i.e., vacuum insulation panels) are combined in accordance with the shape of the tank 11 and are continuously installed so that the vacuum heat insulation members enclose the entire side surface of the tank 11. Though not shown in the drawings, preferably, a vacuum insulation panel is used for a ceiling surface of the tank 11 as well, for insulation. Performance of heat insulation and heat retention is further improved by using the vacuum heat insulation member capable of being processed into a shape fitting the shape of an object to be heat-insulated.

Details of the tank 11 and the pipes will be further described below.

As shown in Fig. 3, the pipes (i.e., the water supply pipe 20, the hot water discharge pipe 21, the return pipe 22, and the inlet pipe 23) respectively include connection portions 20a, 21a, 22a, and 23a connected to the tank 11 inside the case 18. The pipes (i.e., the water supply pipe 20, the hot water discharge pipe 21, the return pipe 22, and the inlet pipe 23) respectively further include extension portions 20b, 21b, 22b, and 23b respectively bending from the connection portions 20a, 21a, 22a, and 23a and extending to an end portion (e.g., an upper end) of the case 18. The heat insulation member 19 forms, between the tank 11 and the heat insulation member 19, a space where the connection portions 20a, 21a, 22a, and 23a of all the pipes and the extension portions 21b, 22b, and 23b of the hot water discharge pipe 21, the return pipe 22, and the inlet pipe 23 are disposed. The extension portion 20b of the water supply pipe 20 is disposed outside this space.

As mentioned above, in this embodiment, the tank 11 and the pipes through which the fluid having at least a certain temperature flows (i.e., the hot water discharge pipe 21, the return pipe 22, and the inlet pipe 23) are heat-insulated by the common heat insulation member 19. Thus, an overall amount of use of the heat insulation member 19 can be greatly reduced. Further, the size of the case 18 becomes compact, so that reduction in the weight of the hot water supply and heating system 10 can also be achieved.

As shown in Fig. 3, the extension portions of the pipes to be heat-insulated by the heat insulation member 19 (i.e., the extension portions 21b, 22b, and 23b of the hot water discharge pipe 21, the return pipe 22, and the inlet pipe 23) are disposed on a substantially opposite side of the extension portion of the remaining pipe (i.e., extension portion 20b of the water supply pipe 20), with the tank 11 interposed therebetween. That is, the extension portions 21b, 22b, and 23b of the hot water discharge pipe 21, the return pipe 22, and the inlet pipe 23 are disposed closer to one another than to the extension portion 20b of the water supply pipe 20.

As mentioned above, in this embodiment, by disposing the hot water discharge pipe 21, the return pipe 22, and the inlet pipe 23, which have close internal water temperatures, close to one another, an amount of heat leakage to the outside can be reduced. Further, by reducing a distance between the tank 11 and each of these pipes, natural convection that may occur between the tank 11 and each of these pipes can be weakened. As a result, an amount of heat leakage to the outside is further reduced, and power consumption is reduced.

On the other hand, the water supply pipe 20 is disposed outside the heat insulation member 19 since the water supply pipe 20 has an internal water temperature different from those of the remaining pipes (i.e., the hot water discharge pipe 21, the return pipe 22, and the inlet pipe 23). This can reduce wasteful heat leakage. Further, the shape and disposition of a corresponding portion of the heat insulation member 19 are elaborately designed, as shown in Fig. 2. Accordingly, the amount of use of the heat insulation member 19 can be further reduced.

In this embodiment, the heat insulation member 19 surrounds a substantial entirety of each of the extension portions 21b, 22b, and 23b of the hot water discharge pipe 21, the return pipe 22, and the inlet pipe 23. The heat insulation member 19, however, may surround only a part of each of the extension portions 21b, 22b, and 23b of the hot water discharge pipe 21, the return pipe 22, and the inlet pipe 23 (e.g., only the part located at the same position as or a lower position than an upper end of the tank 11). In such a case as well, the effects as described above can be obtained to a certain degree.

The heat insulation member 19 surrounds all the pipes except the water supply pipe 20 in this embodiment. The heat insulation member 19, however, may surround only one or two of the hot water discharge pipe 21, the return pipe 22, and the inlet pipe 23. In such a case as well, the effects as described above can be obtained to a certain degree.

In this embodiment, the extension portions 21b, 22b, and 23b of the hot water charge pipe 21, the return pipe 22, and the inlet pipe 23 extend straight along the outer wall of the tank 11. One of the extension portions 21b, 22b, and 23b, however, may extend in a different direction (e.g., an oblique direction), may bend halfway, or may curves. In either case, by fitting the shape and disposition of the heat insulation member 19 to shapes of the extension portions 21b, 22b, and 23b of the hot water discharge pipe 21, the return pipe 22, and the inlet pipe 23, the above-mentioned modification may be accommodated.

As described above, the hot water supply and heating system 10 using the heat pump heat source unit 13 in this embodiment includes the vacuum heat insulation member. The periphery of the hot water supply tank is enclosed by the vacuum heat insulation member. The pipes are also disposed in the space enclosed by the vacuum heat insulation member. In this manner, the common vacuum heat insulation member is used to heat-insulate the hot water supply tank and the pipes in order to save space, in this embodiment. Thus, the amount of use of the vacuum heat insulation member can be reduced.

In this embodiment, the above-mentioned pipes are the pipes through each of which the water having a temperature close to that of the hot water stored in the hot water supply tank flows (i.e., the pipes except the water supply pipe 20). These pipes are disposed in parallel, being close to one another. As mentioned above, in this embodiment, the pipes whose internal water temperatures are close to one another are disposed close to one another, and the water supply pipe 20 is disposed outside the vacuum heat insulation member. Thus, wasteful heat leakage can be reduced, and further, the amount of use of the vacuum heat insulation member can be reduced.

Numerous additional modifications and variations are possible in light of the above teachings. It is therefore to be understood that, within the scope of the appended claims, the disclosure of this patent specification may be practiced otherwise than as specifically described herein.

### Reference Signs List

10: hot water supply and heating system
10a: water circuit
10b: hot water supply circuit
10c: heating circuit
11: tank
11a: hot water storage tank
12: heat exchanger
13: heat pump heat source unit
14: water refrigerant heat exchanger
15: water circulation pump
16: electromagnetic three-way valve
17: hot water heating appliance
18: case
19: heat insulation member
20: water supply pipe
20a, 21a, 22a, 23a: connection portion
20b, 21b, 22b, 23b: extension portion
21: hot water discharge pipe
22: return pipe
23: inlet pipe

## Claims

1. A hot water supply system (10) comprising:
a tank (11) including a hot water storage tank (11a) that stores hot water;
a case (18) that holds the tank;
a plurality of pipes (20, 21, 22, 23) each including a connection portion (20a, 21a, 22a, 23a) connected to the tank (11) and an extension portion (20b, 21b, 22b, 23b) bending from the connection portion (20a, 21a, 22a, 23a) and extending to an end portion of the tank (11); and
a heat insulation member (19) surrounding the tank (11),
the plurality of pipes (20, 21, 22, 23) includes a water supply pipe (20) for supplying water to the hot water storage tank, and a hot water discharge pipe (21), (21) for discharging the water heated by a heat exchanger (12) from the hot water storage tank (11a), wherein the heat insulation member (19) forms, between the tank (11) and the heat insulation member (19), a space where the connection portion (20a, 21a, 22a, 23a) and at least a part of the extension portion (20b, 21b, 22b, 23b) of pipes (20, 21, 22, 23) are disposed, **characterized in that** the system comprises a case (18) that holds the tank, wherein the heat insulation member (19) surrounds the tank (11) inside the case (18),
the plurality of pipes (20, 21, 22, 23) each include the connection portion (20a, 21a, 22a, 23a) inside the case (18) and the extension portion (20b, 21b, 22b, 23b) inside the case (18), in said space the connection portion (20a, 21a, 22a, 23a) and at least a part of the extension portion (20b, 21b, 22b, 23b) of every pipe except the water supply pipe (20) are disposed, the extension portion (20b) of the water supply pipe (20) for supplying water to the tank (11) among the plurality of pipes (20, 21, 22, 23) is disposed outside this space, and
the tank includes a heat exchanger (12) connected to a fluid circuit (10a, 10b, 10c) in which there is a fluid for circulation, the heat exchanger (12) for heating the water stored in the hot water storage tank (11) using the fluid circulating in the fluid circuit,
the plurality of pipes (20, 21, 22, 23) includes an inlet pipe (23) for flowing the fluid circulating in the fluid circuit into the heat exchanger, and a return pipe (22) for returning the fluid used by the heat exchanger to the fluid circuit.

2. The hot water supply system according to claim 1, wherein
the at least one pipe is two or more pipes (21, 22, 23), and the extension portions (20b, 21b, 22b, 23b) of the two or more pipes are disposed closer to each other than to the extension portion (20b, 21b, 22b, 23b) of a remaining one (20) of the plurality of pipes.

3. The hot water supply system according to any one of claims 1 or 2, wherein
the extension portion (20b, 21b, 22b, 23b) of the at least one pipe is disposed on a substantially opposite side of the extension portion of a remaining one (20) of the plurality of pipes, with the tank (11) interposed therebetween.

4. The hot water supply system according to any one of claims 1 to 3, wherein
the heat insulation member (19) is formed by combining a plurality of vacuum heat insulation panels.

## Patentansprüche

1. Warmwasserversorgungssystem (10), umfassend:
einen Tank (11), aufweisend einen Warmwasserspeichertank (11a), der Warmwasser speichert;
ein Gehäuse (18), das den Tank hält;
eine Vielzahl von Rohren (20, 21, 22, 23), jeweils aufweisend einen Verbindungsabschnitt (20a, 21a, 22a, 23a), der mit dem Tank (11) verbunden ist, und einen Verlängerungsabschnitt (20b, 21b, 22b, 23b), der vom Verbindungsabschnitt (20a, 21a, 22a, 23a) abbiegt und sich zu einem Endabschnitt des Tanks (11) erstreckt; und
ein Wärmedämmelement (19), das den Tank (11) umgibt, wobei
die Vielzahl von Rohren (20, 21, 22, 23) ein Wasserzuführrohr (20) zum Zuführen von Wasser an den Warmwasserspeichertank und ein Warmwasserableitungsrohr (21) zum Ableiten des durch einen Wärmetauscher (12) erwärmten Wassers aus dem Warmwasserspeichertank (11a) aufweisen, wobei das Wärmedämmelement (19) zwischen dem Tank (11) und dem Wärmedämmelement (19) einen Zwischenraum bildet, wo der Verbindungsabschnitt (20a, 21a, 22a, 23a) und zumindest ein Teil des Verlängerungsabschnitts (20b, 21b, 22b, 23b) von Rohren (20, 21, 22, 23) angeordnet sind,
**dadurch gekennzeichnet, dass**
das System ein Gehäuse (18) umfasst, das den Tank hält, wobei das Wärmedämmelement (19) den Tank (11) innerhalb des Gehäuses (18) umgibt, die Vielzahl von Rohren (20, 21, 22, 23) jeweils den Verbindungsabschnitt (20a, 21a, 22a, 23a) innerhalb des Gehäuses (18) und den Verlängerungsabschnitt (20b, 21b, 22b, 23b) innerhalb des Gehäuses (18) aufweisen, im Zwischenraum der Verbindungsabschnitt (20a, 21a, 22a, 23a) und zumindest ein Teil des Verlängerungsabschnitts (20b, 21b, 22b, 23b) jedes Rohrs mit Ausnahme des Wasserzuführrohrs (20) angeordnet sind, wobei der Verlängerungsabschnitt (20b) des Wasserzuführrohrs (20) zum Zuführen von Wasser an den Tank (11) unter der Vielzahl von Rohren (20, 21, 22, 23) außerhalb des Zwischenraums angeordnet ist,
und der Tank einen Wärmetauscher (12), der mit einem Fluidkreislauf (10a, 10b, 10c) verbunden ist, in welchem ein Fluid zum Zirkulieren vorhanden ist, und den Wärmetauscher (12) zum Erwärmen des im Warmwasserspeichertank (11) gespeicherten Wassers mittels des im Fluidkreislauf zirkulierenden Fluids aufweist, wobei die Vielzahl von Rohren (20, 21, 22, 23) ein Einlassrohr (23) zum Einströmen des im Fluidkreislauf strömenden Fluids in den Wärmetauscher und ein Rückführungsrohr (22) zum Zurückführen des vom Wärmetauscher genutzten Fluids zum Fluidkreislauf aufweisen.

2. Warmwasserversorgungssystem nach Anspruch 1, wobei
das zumindest eine Rohr zwei oder mehr Rohre (21, 22, 23) sind, und die Verlängerungsabschnitte (20b, 21b, 22b, 23b) der zwei oder mehr Rohre näher zueinander angeordnet sind als zum Verlängerungsabschnitt (20b, 21b, 22b, 23b) eines verbleibenden Rohrs (20) der Vielzahl von Rohren.

3. Warmwasserversorgungssystem nach einem der Ansprüche 1 oder 2, wobei der Verlängerungsabschnitt (20b, 21b, 22b, 23b) des zumindest einen Rohrs auf einer im Wesentlichen gegenüberliegenden Seite des Verlängerungsabschnitts eines verbleibenden Rohrs (20) der Vielzahl von Rohren angeordnet ist, wobei der Tank (11) dazwischen angeordnet ist.

4. Warmwasserversorgungssystem nach einem der Ansprüche 1 bis 3, wobei das Wärmedämmelement (19) durch Kombinieren einer Vielzahl von Vakuumwärmedämmplatten ausgebildet ist.

## Revendications

1. Système d'approvisionnement en eau chaude (10) comprenant :
un réservoir (11) qui comprend un réservoir de stockage d'eau chaude (11a) qui stocke l'eau chaude;
une enveloppe (18) qui tient le réservoir;
une pluralité de canalisations (20, 21, 22, 23), chacune d'elles comprenant une partie connexion (20a, 21a, 22a, 23a) connectée au réservoir (11), et une partie extension (20b, 21b, 22b, 23b) coudée à partir de la partie connexion (20a, 21a, 22a, 23a), et qui s'étend vers une partie extrémité du réservoir (11); et
un élément isolant vis-à-vis de la chaleur (19) qui entoure le réservoir (11);
la pluralité de canalisations (20, 21, 22, 23) comprend une canalisation d'approvisionnement en eau (20) destinée à fournir l'eau dans le réservoir de stockage d'eau chaude, et une canalisation d'évacuation d'eau chaude (21), destinée à évacuer à partir de la cuve de stockage d'eau chaude (11a), l'eau chauffée par un échangeur de chaleur (12), dans lequel l'élément isolant vis-à-vis de la chaleur (19) forme, entre le réservoir (11) et l'élément isolant vis-à-vis de la chaleur (19), un espace où sont disposées la partie connexion (20a, 21a, 22a, 23a) et une partie au moins de la partie extension (20b, 21b, 22b, 23b) des canalisations (20, 21, 22, 23) ;
**caractérisé en ce que** :
le système comprend une enveloppe (18) qui tient le réservoir, dans lequel l'élément isolant vis-à-vis de la chaleur (19) entoure le réservoir (11) à l'intérieur de l'enveloppe (18), chacun de la pluralité de tuyaux (20, 21, 22, 23) comprend la partie connexion (20a, 21a, 22a, 23a) à l'intérieur de l'enveloppe (18) et la partie extension (20b, 21b, 22b, 23b) à l'intérieur de l'enveloppe (18), la partie connexion (20a, 21a, 22a, 23a) et une partie au moins de la partie extension (20b, 21b, 22b, 23b) de chaque canalisation à l'exception de la canalisation d'approvisionnement en eau (20), sont disposées dans ledit espace, et la partie extension (20b) de la canalisation d'approvisionnement en eau (20) destinée à fournir l'eau dans le réservoir (11), parmi la pluralité de canalisations (20, 21, 22, 23), est disposé en dehors de cet espace; et
le réservoir comprend un échangeur de chaleur (12) connecté à un circuit de fluide (10a, 10b, 10c) dans lequel circule un fluide, l'échangeur de chaleur (12) destiné à chauffer l'eau stockée dans le réservoir de stockage d'eau chaude (11) utilisant le fluide qui circule dans le circuit de fluide;
la pluralité de canalisations (20, 21, 22, 23) comprend une canalisation d'entrée (23) destinée à fournir à l'échangeur de chaleur, le fluide qui circule dans le circuit de fluide, et une canalisation de retour (22) destinée à faire revenir dans le circuit de fluide, le fluide utilisé par l'échangeur de chaleur.

2. Système d'approvisionnement en eau chaude selon la revendication 1, dans lequel :
la ou les canalisations sont constituées de deux canalisations ou plus (21, 22, 23), et les parties extensions (20b, 21b, 22b, 23b) des deux canalisations ou plus, sont disposées plus proches les unes des autres que de la partie extension (20b, 21b, 22b, 23b) de l'autre restante (20) de la pluralité de canalisations.

3. Système d'approvisionnement en eau chaude selon la revendication 1 ou la revendication 2, dans lequel:
la partie extension (20b, 21b, 22b, 23b) de la ou des canalisations, est disposée sur un côté sensiblement opposé de la partie extension de l'autre restante (20) de la pluralité de canalisations, le réservoir (11) étant interposé entre celles-ci.

4. Système d'approvisionnement en eau chaude selon l'une quelconque des revendications 1 à 3, dans lequel:
l'élément isolant vis-à-vis de la chaleur (19) est formé en associant une pluralité de panneaux isolants vis-à-vis de la chaleur sous vide.
